**Europäisches Patentamt**

**European Patent Office**

**Office européen des brevets**

(19)

(11) Veröffentlichungsnummer : **0 117 844**
**B1**

(12)

# EUROPÄISCHE PATENTSCHRIFT

(45) Veröffentlichungstag der Patentschrift :
15.06.88

(21) Anmeldenummer : 84810035.0

(22) Anmeldetag : 20.01.84

(51) Int. Cl.⁴ : **F 16 K 17/00**, F 16 K 37/00,
G 05 D 16/00, H 01 H 35/24

(54) Druckregelventil mit elektrischer Kontrolle.

(30) Priorität : 28.01.83 CH 510/83

(43) Veröffentlichungstag der Anmeldung :
05.09.84 Patentblatt 84/36

(45) Bekanntmachung des Hinweises auf die Patenterteilung : 15.06.88 Patentblatt 88/24

(84) Benannte Vertragsstaaten :
DE FR GB IT

(56) Entgegenhaltungen :
DE-A- 2 412 054
DE-A- 3 148 454
DE-B- 1 640 375
US-A- 3 898 403
US-A- 3 989 911
US-A- 4 081 621
US-A- 4 242 082
US-A- 4 317 971

(73) Patentinhaber : Kummer Frères SA, Fabrique de
machines
Rue de la Promenade 26
CH-2720 Tramelan (CH)

(72) Erfinder : Der Erfinder hat auf seine Nennung verzichtet

(74) Vertreter : Tschudi, Lorenz et al
Bovard AG Patentanwälte VSP Optingenstrasse 16
CH-3000 Bern 25 (CH)

EP 0 117 844 B1

## Beschreibung

Die Erfindung bettrift ein Luftdruckregelventil mit einem Primärdruckeingang, einem druckgeregelten Sekundärdruckausgang und einem beweglichen Ventilteller zum selectiven Freigeben oder Absperren eines Durchflusses zwischen den genannten Eingang und dem Ausgang, wobei dieser Ventilteller sich, zusammen mit eine Membrane enthaltenden Steuerelementen bewegt, und wobei diese Membrane einerseits dem im Ausgang herrschenden Sekundärdruck und anderseits der regelbaren Druckkraft einer Feder ausgesetzt ist.

Derartige Druckregelventile sind allgemein bekannte pneumatische Geräte. Druckregelventile reduzieren den Primärdruck (Netzdruck) auf einen gewünschten Sekundärdruck (Betriebsdruck) und halten diesen Wert weitgehend konstant, unabhängig vom Luftverbrauch und von Primärdruck-Schwankungen.

Druckschalter haben allgemein die Aufgabe, beim Erreichen eines bestimmten pneumatischen Druckes einen elektrischen Stromkreis ein- bzw. auszuschalten. Somit kann mit einem Druckschalter der mit einem Druckregelventil eingestellte Sekundärdruck überwacht werden, indem der Druckschalter an den Sekundärkreis angeschlossen wird.

Muss nun bei einer solchen Anordnung der Sekundärdruck verstellt werden, so muss auch der Druckschalter neu eingestellt werden. Dies erfordert einen Zeitaufwand und bei unsorgfältiger oder gar vergessener Neueinstellung des Druckschalters können sich Betriebsstörungen und Unfälle ergeben.

Aufgabenstellung der Erfindung war es, ein Druckregelventil zu schaffen, bei dem ein elektrisches Signal abgegeben wird, sobald der eingestellte Sekundärdruck um einen bestimmten Betrag p abfällt und zwar so, dass nur der Sekundärdruck eingestellt werden muss, an der elektrischen Drucküberwachung selbst, aber keine Neueinstellung erforderlich ist.

Zur Lösung der Aufgabe ist, erfindungsgemäss, die Luftdruckregelventil der obengennanten Gattung dadurch gekennzeichnet, dass der Ventilteller und seine Steuerelemente so ausgebildet sind, dass ein mitbewegliches Element, beim Oeffnungsweg des Ventiltellers ein elektrisches Schaltglied als Sekundärdrucküberwachungsanordnung betätigt.

Inbezug auf weitere Besonderheiten eines Ausführungsbeispieles wird auf die abhängigen Ansprüche hingewiesen.

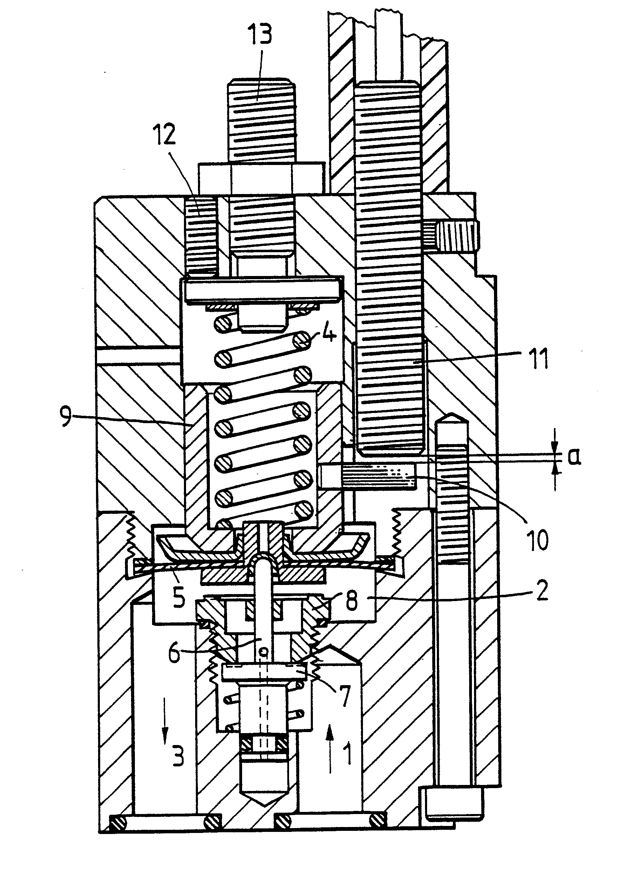

Die Erfindung wird nachfolgend unter Bezugnahme auf die beiliegende Zeichnung beispielsweise erläutert.

Die einzige Figur zeigt das Druckregelventil im Längsschnitt.

Das Druckregelventil selbst arbeitet in bekannter Weise als P-Regler. Der Primärdruck tritt bei 1 ein. Durch Rechtsdrehen einer Einstellspindel 13 wird nun eine Einstellfeder 4 gespannt und eine Membrane 5 nach unten gedrückt. Dabei betätigt sie einen Ventilbetätigungsstift 6 und ein Ventilteller 7 hebt sich vom Ventilsitz 8 ab. Durch den entstehenden Ringspalt strömt nun die Druckluft in den Sekundärdruckraum 2 und gelangt am Ausgang 3 zum Verbraucher. Erfolgt keine Entnahme, so baut sich im Sekundärdruckraum 2 ebenfalls ein Druck auf und drückt die Membrane 5 wieder nach oben.

Dadurch wird der Ventilteller 7 wieder auf seinen Sitz 8 gedrückt und das Ventil schliesst. Bei Luftentnahme sinkt der Druck im Sekundärdruckraum 2, die Federkraft überwiegt die Membrankraft und das Ventil öffnet wieder.

Der Oeffnungsweg des Ventiltellers 7 ist nun proportional der Druckdifferenz $\Delta p$ zwischen dem eingestellten Sekundärdruck und dem tatsächlich im Sekundärdruckraum 2 herrschenden Druck. Dieser Sachverhalt wird nun erfindungsgemäss zur elektrischen Druckkontrolle ausgenützt.

Die Einstellfeder 4 wirkt über einen Führungskolben 9 auf die Membrane 5. Der Führungskolben 9 und ein in diesen eingepresster Stift 10 machen also den gleichen von $\Delta p$ abhängigen Weg wie die Membrane 5, der Ventilbetätigungsstift 6 sowie der Ventilteller 7.

Fällt nun der Sekundärdruck ab, so bewegt sich der Stift 10 nach unten, der Abstand a zwischen ihm und einem induktiven Näherungsschalter 11 vergrössert sich und der Näherungsschalter 11 gibt beim Ueberschreiten eines vorgewählten $\Delta p$-Grenzwertes bzw. Abstandes a ein elektrisches Signal ab. Dieser $\Delta p$-Grenzwert verändert sich nicht beim Verstellen des Sekundärdruckes. Somit ist ohne Neueinstellung der elektrischen Druckkontrolle diese auch bei veränderter Sekundärdruckeinstellung gewährleistet. Mit 12 ist eine Einstellschraube bezeichnet, die verhindert, dass ein vorwählbarer Minimalsekundärdruck unterschritten werden kann.

## Patentansprüche

1. Luftdruckregelventil mit einem Primärdruckeingang (1), einem druckgeregelten Sekundärdruckausgang (3) und einem beweglichen Ventilteller (7) zum selectiven Freigeben oder Absperren eines Durchflusses zwischen den genannten Eingang (1) und dem Ausgang (3), wobei dieser Ventilteller sich, zusammen mit eine Membrane (5) enthaltenden Steuerelementen (5, 9) bewegt, und wobei diese Membrane einerseits dem im Ausgang (3) herrschenden Sekundärdruck und anderseits der regelbaren Druckkraft einer Feder (4) ausgesetzt ist, dadurch gekennzeichnet, dass der Ventilteller (7) und seine Steuerelemente (5, 9) so ausgebildet sind, dass ein mitbewegliches Element (10), beim Oeffnungsweg des Ventiltellers ein elektrisches Schaltglied als Sekundärdrucküberwachungsanordnung (11) betätigt.

2. Druckregelventil nach Anspruch 1, dadurch gekennzeichnet, dass als elektrisches Schaltglied ein induktiver Näherungsschalter (11) vorgesehen ist.

3. Druckregelventil nach Anspruch 2, dadurch gekennzeichnet, dass die Sekundärdruckdifferenz Δp zwischen Ist- und Sollwert, bei welcher ein elektrisches Signal abgegeben werden soll, durch Ein- bzw. Ausschrauben des Näherungsschalters (11) einstellbar ist.

4. Druckregelventil nach Anspruch 1, gekennzeichnet durch eine Einstellschraube (12), die verhindert, dass ein vorwählbarer Minimal-Sekundärdruck unterschritten werden kann.

### Claims

1. Air-pressure control valve having a inlet pressure orifice (1), a pressure-controlled outlet pressure orifice (3), and a movable valve disc (7) for selectively releasing or blocking a flow passage between the said inlet orifice (1) and the outlet orifice (3), this valve disc moving together with control elements (5, 9) containing a diaphragm (5), and this diaphragm being exposed to the outlet pressure prevailing in the outlet orifice (3), on the one hand, and to the controllable force of pressure of a spring (4), characterized in that the valve disc (7) and its control elements (5, 9) are so designed that during the opening travel of the valve disc a comovable element (10) actuates an electric switching member as an outlet-pressure monitoring arrangement (11).

2. Pressure control valve according to claim 1, characterized in that an inductive proximity switch (11) is provided as an electric switching member.

3. Pressure control valve according to claim 2, characterized in that the outlet-pressure difference Δp between instantaneous value and set value at which an electric signal is to be transmitted is adjustable by screwing the proximity switch (11) in or out.

4. Pressure control valve according to claim 1, characterized by a setting screw (12) which prevents the outlet pressure from falling below a preselectable minimum.

### Revendications

1. Soupape régulatrice de pression d'air avec une entrée de pression primaire (1), une sortie de pression secondaire (3) réglée quant à la pression et un disque de soupape mobile (7) pour libérer ou obturer sélectivement un passage entre ladite entrée (1) et ladite sortie (3), ce disque de soupape se mouvant avec des éléments de commande (5, 9) comprenant une membrane (5), et cette membrane étant soumise d'un côté à la pression secondaire régnant dans la sortie (3) et de l'autre côté à la force pressante réglable d'un ressort (4), caractérisée en ce que le disque de soupape (7) et ses éléments de commande (5, 9) sont configurés de façon telle qu'un élément (10) se mouvant avec eux actionne, lors du chemin d'ouverture du disque de soupape, un agencement commutateur électrique en temps que dispositif (11) de surveillance de pression secondaire.

2. Soupape régulatrice de pression selon la revendication 1, caractérisée en ce qu'un commutateur de proximité inductif (11) est prévu comme agencement commutateur électrique.

3. Soupape régulatrice de pression selon la revendication 2, caractérisée en ce que la différence de pression secondaire Δp entre la valeur effective et une valeur de consigne à laquelle un signal électrique doit être délivré est ajustable respectivement par vissage et par dévissage du commutateur de proximité (11).

4. Soupape régulatrice de pression selon la revendication 1, caractérisée en ce qu'une vis de réglage (12) empêche que la pression secondaire soit réglée en dessous d'une valeur de pression secondaire minimale présélectionnable.